(19) Europäisches Patentamt / European Patent Office / Office européen des brevets

(11) **EP 4 404 639 A1**

(12) **EUROPEAN PATENT APPLICATION**

(43) Date of publication:
**24.07.2024 Bulletin 2024/30**

(21) Application number: **24150917.3**

(22) Date of filing: **09.01.2024**

(51) International Patent Classification (IPC):
*H04W 52/02* (2009.01)   *H04B 7/00* (2006.01)
*H04W 72/00* (2023.01)   *H04W 76/00* (2018.01)
*H04W 88/00* (2009.01)

(52) Cooperative Patent Classification (CPC):
**H04W 52/0206; H04B 7/00; H04W 72/00;
H04W 76/00; H04W 88/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.01.2023   FI 20235055**

(71) Applicant: **Nokia Solutions and Networks Oy
02610 Espoo (FI)**

(72) Inventors:
• **MAGGI, Lorenzo
  75013 Paris (FR)**
• **AALTONEN, Simo Ville
  00750 Helsinki (FI)**

(74) Representative: **Nokia EPO representatives
Nokia Technologies Oy
Karakaari 7
02610 Espoo (FI)**

(54) **OPTIMIZING USAGE OF POWER**

(57)     An apparatus, comprising: at least one processor; and at least one memory storing instructions that when executed by the at least one processor cause the apparatus at least to perform: collecting traffic information indicative of user radio conditions within a cell group comprising at least one cell; and determining, from the traffic information, a plurality of time windows, the plurality of time windows having different specified user traffic load threshold conditions for switching off and switching on of cells within the cell group.

FIG. 6

**Description**

TECHNOLOGICAL FIELD

Various example embodiments relate to apparatus and a method for optimizing usage of power in a wireless communications network.

BACKGROUND

In a wireless telecommunications network, cells are provided which support communication with user equipment. Such an approach can lead to excess energy consumption by the network. Accordingly, it is desired to provide an improved technique which optimizes the use of power by the network.

BRIEF SUMMARY

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

According to various, but not necessarily all, example embodiments of the invention there is provided an apparatus, comprising: at least one processor; and
at least one memory storing instructions that when executed by the at least one processor cause the apparatus at least to perform: collecting traffic information indicative of user radio conditions within a cell group comprising at least one cell; and determining, from the traffic information, a plurality of time windows, the plurality of time windows having different specified user traffic load threshold conditions for switching off and switching on of cells within the cell group.

The plurality of time windows may fill a first time period.

The plurality of time windows may be contiguous within the first time period.

The plurality of time windows may comprise a sequence of adjacent, non-overlapping time windows within the first time period.

The first time period may comprise one of a day, week or month.

The first time period may be a repeating first time period. In other words, the first time period may be repeated.

Time windows within the plurality of time windows may have a minimum duration.

The minimum duration may comprise a number of hours.

At least one time window may comprise a time period where it is determined from the traffic information falling within that time period that the traffic information within that time period is stable.

The plurality of time windows may comprise time periods determined to have a variance within each time period which is lower than across the first time period.

At least one time window may comprise a time period where it is determined from the traffic information falling within that time period that a variance of the traffic information within that time period is low.

The plurality of time windows may comprise time periods determined to have a sum across the time periods of a variance of the traffic information within each time period which is minimised.

The at least one processor may cause the apparatus at least to perform: calculating different specified user traffic load threshold conditions for different time windows from the traffic information falling within those windows.

The specified user traffic load threshold conditions for switching off cells within the cell group may be lower for a time window having a lower user traffic load compared to a time window having a higher user traffic load.

The specified user traffic load threshold conditions for switching on cells within the cell group may be higher for a time window having a higher user traffic load compared to a time window having a lower user traffic load.

The specified user traffic load threshold conditions may define a pair of thresholds for determining if a cell is to be switched on or switched off.

The pair of thresholds may comprise a lower threshold below which a cell is to be switched off and an upper threshold above which a cell is to be switched on.

The traffic information may comprise one or more Key Performance Indicators, counters and/or a Channel Quality Indicator.

The at least one processor may cause the apparatus at least to perform: periodically repeating determining the plurality of time windows and calculating different specified user traffic load threshold conditions for different time windows.

The at least one processor may cause the apparatus at least to perform: determining for a current time window whether to switch off or switch on cells within the cell group based on a relationship between the specified user traffic load threshold conditions for that current time window and current user traffic load within the cell group.

The apparatus may comprise a network node, a self-organising network node or a base station.

According to various, but not necessarily all, example embodiments of the invention there is provided a method comprising: collecting traffic information indicative of user radio conditions within a cell group comprising at least one cell; and determining, from the traffic information, a plurality of time windows, the plurality of time windows having different specified user traffic load threshold conditions switching off and switching on of cells within the cell group.

The plurality of time windows may fill a first time period.

The plurality of time windows may be contiguous within the first time period.

The plurality of time windows may comprise a sequence of adjacent, non-overlapping time windows within the first time period.

The first time period may comprise one of a day, week or month.

The first time period may be a repeating first time period.

Time windows within the plurality of time windows may have a minimum duration.

The minimum duration may comprise a number of hours.

At least one time window may comprise a time period where it is determined from the traffic information falling within that time period that the traffic information within that time period is stable.

The plurality of time windows may comprise time periods determined to have a variance within each time period which is lower than across the first time period.

At least one time window may comprise a time period where it is determined from the traffic information falling within that time period that a variance of the traffic information within that time period is low.

The plurality of time windows may comprise time periods determined to have a sum across the time periods of a variance of the traffic information within each time period which is minimised.

The method may comprise calculating different specified user traffic load threshold conditions for different time windows from the traffic information falling within those windows.

The specified user traffic load threshold conditions for switching off cells within the cell group may be lower for a time window having a lower user traffic load compared to a time window having a higher user traffic load.

The specified user traffic load threshold conditions for switching on cells within the cell group may be higher for a time window having a higher user traffic load compared to a time window having a lower user traffic load.

The specified user traffic load threshold conditions may define a pair of thresholds for determining if a cell is to be switched on or switched off.

The pair of thresholds may comprise a lower threshold below which a cell is to be switched off and an upper threshold above which a cell is to be switched on.

The traffic information may comprise one or more Key Performance Indicators, counters and/or a Channel Quality Indicator.

The method may comprise periodically repeating determining the plurality of time windows and calculating different specified user traffic load threshold conditions for different time windows.

The method may comprise determining for a current time window whether to switch off or switch on of cells within the cell group based on a relationship between the specified user traffic load threshold conditions for that current time window and current user traffic load within the cell group.

According to various, but not necessarily all, example embodiments of the invention there is provided a non-transitory computer readable medium comprising program instructions stored thereon for performing at least the following: collecting traffic information indicative of user radio conditions within a cell group comprising at least one cell; and determining, from the traffic information, a plurality of time windows, the plurality of time windows having different specified user traffic load threshold conditions for switching off and switching on of cells within the cell group.

The instructions may perform the method steps set out above.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function. The apparatus may instead comprise means for performing the steps set out above.

BRIEF DESCRIPTION

Some example embodiments will now be described with reference to the accompanying drawings in which:

FIG. 1 illustrates a of Power Saving Group (PSG) used for energy savings via cell switch-off;
FIG. 2 shows physical resource block (PRB) utilization (load) time evolution within a PSG when energy saving features are activated with a certain pair of Min/MaxLoad thresholds;

FIG. 3 shows an evolution over the hour of the day of downlink traffic volume - data was aggregated over a cluster of ~30 sites (90 PSGs) on a network;

FIG. 4 shows an evolution over different hours of the day of Channel Quality Indicator and PRB utilization - both are categorized by frequency layer - data was aggregated over a cluster of ~30 sites (90 PSGs) on a network;

FIG. 5 shows an evolution over the hour of the day of Channel Quality Indicator (CQI) on a PSG basis - comparing with FIG 4, it is evident that not all PSGs have the same and classic daytime/night time periodic behaviour;

FIG. 6 is a flow diagram illustrating the main steps of an example embodiment;

FIG. 7 shows values of the Key Performance Indicator (KPI) constraint (Pr(KPI$\geq$ Y), where here KPI=IP Download (DL) throughput on QCI9, Y=4Mbps) for different values of CQI and PRB utilization (load) - it is evident that, as radio conditions (i.e., CQI) improve, higher value of PRB utilization (hence, load thresholds) can be sustained for the same confidence X with which the constraint is fulfilled;

FIG. 8 illustrates an interplay between a threshold optimization procedure and the Power Saving Window (PSW) optimisation - example embodiments optimize the span of each window PSW1,...,PSWn, as well its number n - Note that the union of PSW1,...,PSWn covers one full day (24h);

FIG. 9 illustrate examples of per-PSG PSW optimization (cf FIG. 5) - the vertical bars denote the time instants t_1,...,t_n that separate contiguous PSWs - the procedure splits time into periods within which CQI tends to be stable;

FIG. 10 illustrates an exemplary embodiment of a network architecture in which the optimization takes place;

FIG. 11 illustrates a flow chart according to an exemplary embodiment for optimizing threshold values; and

FIG. 12 illustrates an exemplary embodiment of an apparatus.

## DETAILED DESCRIPTION

Before discussing the example embodiments in any more detail, first an overview will be provided. Some example embodiments provide a technique which optimises power savings in cell groups known as power saving groups. One or more cells may be provided as a power saving group and cells within that group may transition between switch on and switch off in response to changing user traffic load. Currently, a pair of user traffic load thresholds are set passing those thresholds cause cells to be turned on or off. However, example embodiments recognise that these thresholds fail provide all the power savings possible. This is because the thresholds are applied across the entire operating period of the cells and the user traffic load within the cells can vary dramatically within that operating period. Example embodiments instead spilt the operating period of the cells into a plurality of time or timing windows known as power saving windows. Power saving windows are periods selected to have more consistent user traffic load. The power saving windows are periods of time with reasonably static or consistent levels of traffic. In other words, the power saving windows are periods of time where there is comparatively little variance in the levels of traffic compared to the variance of traffic across the whole operating period. Those power saving windows have different thresholds which are more appropriate to the user traffic load during those power saving windows. This allows greater power savings to be achieved during periods of lower user traffic load compared to periods of higher user traffic load.

The energy consumption of a Radio Access Network (RAN) typically accounts for 20-25% of the network Total Cost of Ownership (TCO) and operators globally spend large amounts each year on energy alone. Furthermore, the energy needs of future networks are likely to exceed current demand due to increased cellular densities, massive Multiple Input Multiple Output (MIMO) and further advances. All of this, coupled with the need to reduce carbon emissions to zero by mid-century, makes Energy Savings (ES) an important feature of any large-scale infrastructure. Base Stations (BTS) typically consume most of the energy used by the RAN. Much of the power is consumed by the Power Amplifiers (PAs), although baseband processing and switching also uses part of it. This is why most ES features use the Base Stations as the optimization target. Driven mainly by cost, but also by environmental concerns, mobile network operators are increasingly using the energy savings features.

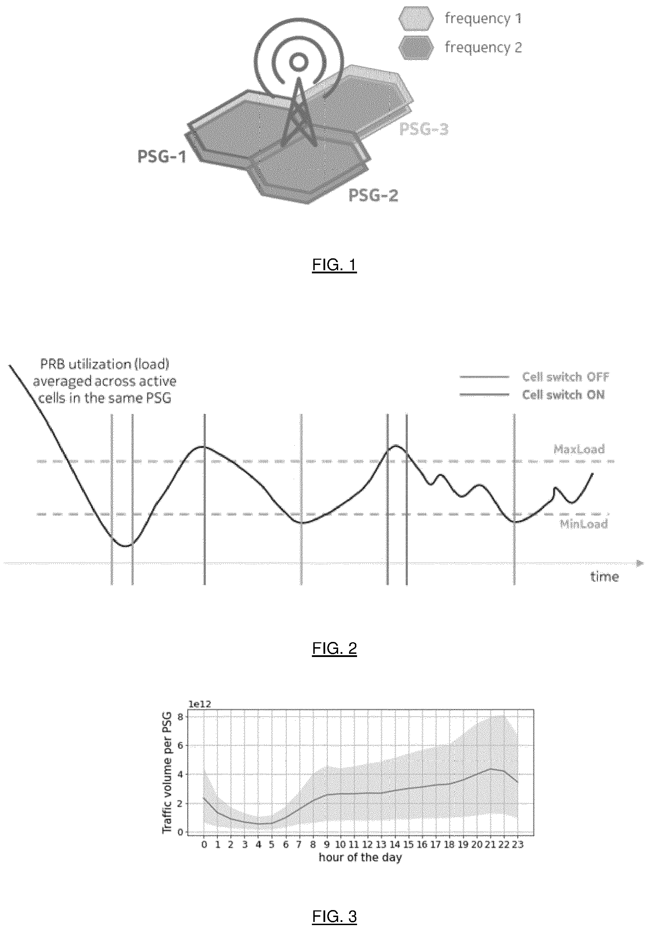

Existing techniques such as load-based power-saving for multi-layer networks widely used energy savings functionalities. These monitor the physical resource block (PRB) utilization on a group of cells known as the Power Savings Group (PSG), as illustrated in FIG. 1. When the PRB utilization drops below a pre-configured (MinLoad) threshold, one of more cells are switched off through a graceful shutdown procedure (in an order specified by the parameter CellSwitchOffOrder). A cell is then switched back on (in an order specified by the parameter CellSwitchOnOrder) when the PRB utilization at PSG level grows above another pre-configured threshold (MaxLoad). In other words, the try to keep the PSG load (PRB utilization) within [MinLoad; MaxLoad] thresholds, as illustrated in FIG. 2. Techniques for determining these thresholds are set out in more detail below. Although cell switch off should occur as the PRB utilisation crosses IbsMinload, in practice there is often a delay until this occurs and multiple switch off instructions may be generated. Likewise, although cell switch on should occur as the PRB utilisation crosses and MaxLoad, in practice there is often a delay until this occurs and multiple switch on instructions may be generated. In current networks, cells are switched off during the night, which is when less-active UEs could be affected by the cell shutdown, although important savings can be achieved during daytime as well. Energy savings via the cell switch-off rely on two thresholds (IbsMinload and MaxLoad) to decide when a new cells must be switched on (namely, when the average PRB utilization at the PSG level exceeds MaxLoad, here called $\rho_{max}$) or put to sleep (namely, when the average PRB utilization at the PSG level goes below MinLoad, here called $\rho_{min}$). The order in which cells are switched off and back on is provided as input, and it is typically in decreasing order of frequency. Also, the lower layer (L800, in LTE) is supposed to be always active to preserve coverage. It will be appreciated that the higher these two thresholds (Max/MinLoad) are, the higher the energy savings that can be achieved, i.e., the energy consumed by the BTS is lower, since fewer cells are active on average. However, for the same reason, this comes at the expense of end-user Quality of Service (QoS) which tends to degrade.

The problem of optimizing thresholds can be formulated as:

$$\min_{\rho_{min}, \rho_{max}} BTS\ energy\ consumption\ (\rho_{min}, \rho_{max}) \quad (1)$$

$$s.t.\ \ \Pr(KPI \geq Y) \geq X$$

where KPI is a Key Performance Indicator of preference (e.g., the downlink/uplink throughput/traffic volume etc.) or a positive linear combination of several individual KPIs. Although how to optimize thresholds on a PSG basis can be based on the previous formulation (1), intuition suggests, during non-busy hours, with low traffic and hence low interference from neighboring sites (thus, better radio conditions), cells can be put to sleep more often; hence, thresholds can be higher. On the contrary, during busy hours, with high traffic hence high inter-cell high interference, more cells need to be active; hence, thresholds should be lower.

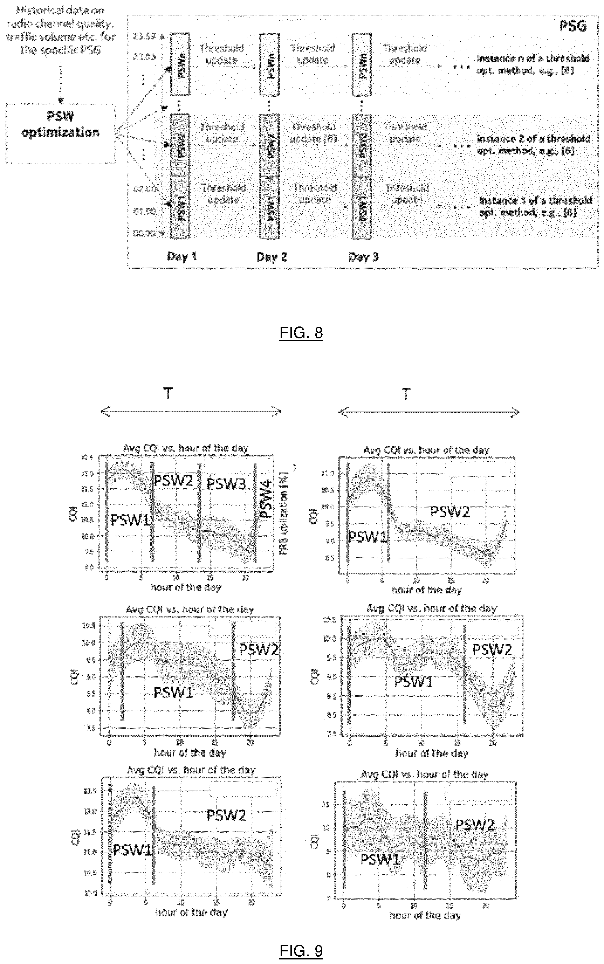

FIGS. 3 to 5 show indeed how Channel Quality Indicator (CQI - an example of one possible KPI) and traffic volume (another example of one possible KPI) vary across different hours of the day for an aggregate cluster of PSGs, as well as for individual PSGs. FIG. 8 shows that indeed, when CQI is higher, higher values of the load thresholds can be sustained.

Hence, if the problem set out above is solved naively over the whole 24h window, the procedure set out above finds thresholds that do satisfy the constraint $Pr(KPI \geq Y) \geq X$ on average over 24h, but they will turn out to be unacceptably high during daytime (during which $Pr(KPI \geq Y) < X$, hence the user equipment (UEs) will experience low QoS) and unnecessarily low during night time (during which $Pr(KPI \geq Y) \gg X$ and little savings are achieved).

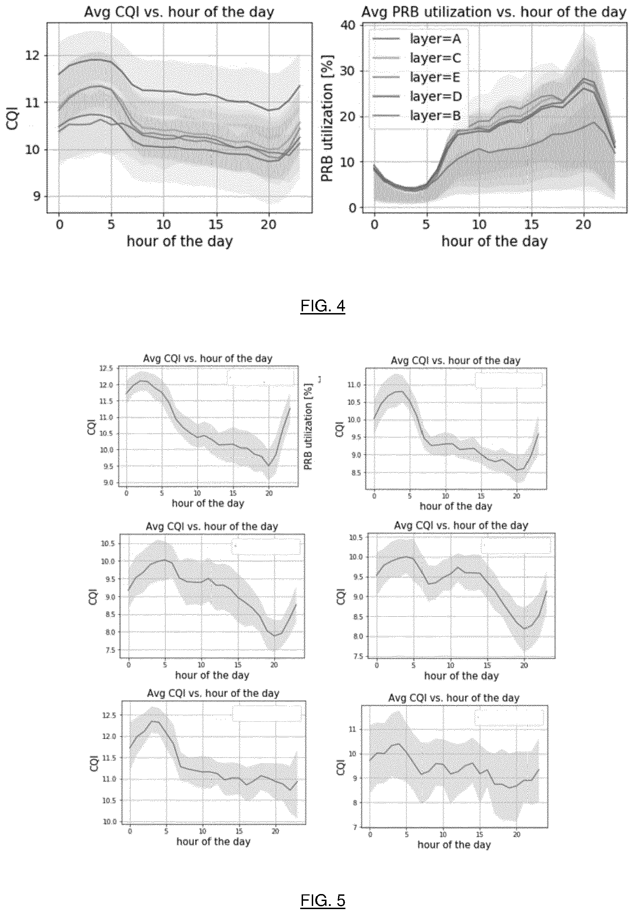

Thus, it is helpful to optimize thresholds via formulation (1) on a per-PSG and, in example embodiments, separately for different time slots (called Power Saving Windows - PSW). Hence, example embodiments provide an automated technique that optimizes the PSWs on a PSG basis, over which separate instances of a threshold optimization procedure (like the one set out above) is run independently. Optimizing PSWs on each PSG is beneficial since each PSG may have different traffic profiles (as shown in FIG. 5).

To recap, the existing techniques do not propose any PSW optimization and just finds one slot within the 24h (i.e., a PSW, also called Opportunity Window (OW)), typically during night time, over which the existing technique is activated and threshold optimization procedure is performed. Instead, example embodiments recognise that existing techniques have the potential to be activated during daytime as well and achieve higher savings. Moreover, example embodiments recognise that it is sub-optimal to deploy the same thresholds across the whole 24 hours (even if those may be optimized on a PSG basis). In fact, as already mentioned, the optimization procedure set out above finds a threshold pair that works well on average over 24h, but which is too conservative during the night time (i.e., higher energy savings could be achieved during night time) and which is too aggressive during the day time (i.e., KPI is severely degraded during day time). Therefore, example embodiments optimize the number of PSWs and their time span within a day, over which independent instances of a threshold optimization procedure (like the one set out above) is run independently.

Example embodiments provide a data-driven technique that, for each PSG, chooses a certain number of Power Saving Windows (PSWs) partitioning the 24 hours (or other repeating time period) into non-overlapping time slots, over which separate instances of a load threshold optimization procedure (like the one set out above) is run independently (see FIG. 8).

As a result, thresholds are tailored to both the specific PSG and to each hour (or other time portion or time window) of the day, in such a way to jointly ensure that

- energy savings are maximized within each PSW
- KPI constraint $Pr(KPI \geq Y) \geq X$ is fulfilled at *any* hour (or other time portion) of the day (and not only on average over the whole 24 hours, as a naïve implementation of the technique set out above would perform) so as to guarantee a seamlessly good KPI level to users throughout the day.

Process Overview

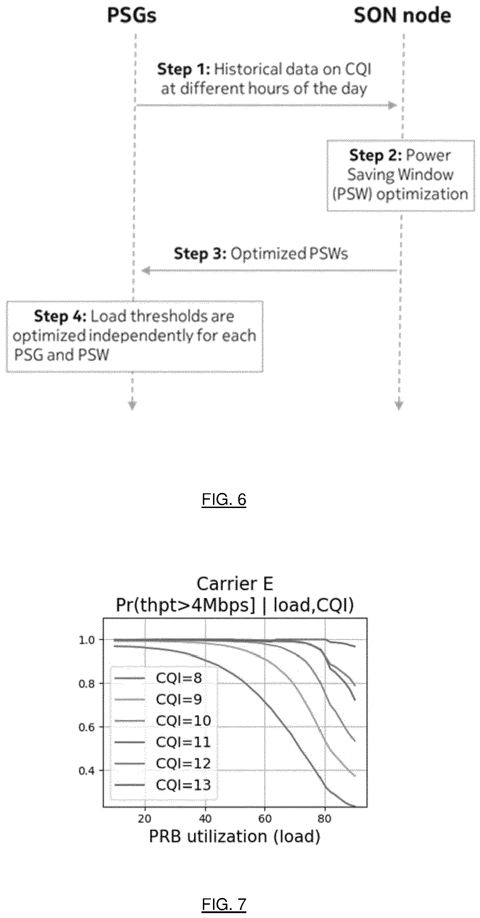

The main processing steps are illustrated in FIG. 6.

At step 1, data is collected, typically at a central node or other node responsible for configuration of the PSG. For each PSG and typically for several days or other such period which provides adequate load information, the central node collects historical suitable KPI and counters (which are typically building blocks of KPIs which count basic quantities such as, for example, the number of transmission packets) at all hours of the day for the required period, such as Average Channel Quality Indicator (CQI). It will be appreciated that CQI is directly related to the radio channel quality, having a strong impact on the maximum allowable PRB utilization to guarantee a certain KPI level, hence on the optimal threshold pair, as illustrated in FIG 7.

At step 2, PSW optimization occurs. For each PSG, the central node outputs a list of non-overlapping Power Saving Windows (PSWs) covering the whole 24h period or other period. Typically, a plurality of discrete PSWs are generated, adjacent in time to each other. This step is set out in more detail below. This operation is typically run for each PSG in non-real time and once for all, before the threshold optimization procedure is triggered for a specific PSG. It will be appreciated that this step can be repeated periodically.

At step 3, PSW update occurs. The central node sends to each gNB (and corresponding PSG) the optimized PSWs.

At step 4, threshold optimization occurs. Over each optimized PSW and for each PSG, a different instance of an iterative threshold optimization algorithm is run, as illustrated in FIG 8.

The base stations or access nodes then apply the calculated thresholds within the associated PSWs to save power based on the current traffic load while also providing an appropriate QoS to the user equipment.

PSW Optimisation

The PSW optimisation of step 2 that produces a set of optimized PSWs for each PSG will now be set out in more detail. The PSWs are typically those determined such that the sum (across different windows) of traffic information variance (computed over each window) is minimized.

Once data has been collected by a central node as in step 1, step 2 optimizes PSWs so as that

a) Radio conditions (i.e., CQI) are (relatively) stable within each PSW. This ensures that the same pair of load threshold Min/MaxLoadThreshold is uniformly good throughout the whole PSW, and no KPI degradation is noticeable by the users.

b) PSWs are non-overlapping and cover the whole repeating time period T, such as 24 h or other period (e.g., PSW1 =[01.00-07.00], PSW2=[07.00-18.00], PSW3=[18.00-01.00] - that is to say that PSW1 ends at 07.00 and PSW2 starts at 07.00, PSW2 ends at 18.00 and PSW3 starts at 18.00, PSW3 ends at 01.00 (the following day) and PSW1 starts at 01.00 (the following day)).

c) Each PSW has a minimum time span, e.g., each PSW lasts for at least H hours or other period, where H(≤24) is configurable. This has a two-fold objective:

∘ It limits the number of parallel instances of the threshold optimization procedures that are run over each PSW independently, hence it limits the computational complexity of the overall threshold optimization method.
∘ The longer the PSW, the higher the number of KPI samples (usually collected every 15 min or other period for each active cell, namely, frequency layer) that are collected each day. This speeds up the convergence time of the threshold update algorithm.

The PSW optimization problem above can be formalized mathematically as follows:

$$\min_{n,t_1,t_2,\ldots,t_n} \frac{1}{n}\big(\mathrm{Var}(CQI[t_n,t_1]) + \mathrm{Var}(CQI[t_1,t_2]) + \cdots + \mathrm{Var}(CQI[t_{n-1},t_n])\big) \quad (2)$$

$$s.t.\ 0 \le t_1 \le \cdots \le t_n \le 24$$

$$(t_1 - t_n)mod\,24 \ge H, \qquad t_i - t_{i-1} \ge H, \qquad \forall i = 2,\ldots,n$$

where $Var(CQI[t_i, t_{i+1}])$ is the variance of the CQI samples for the specific PSG from historical data whose time stamps are contained within the time interval $[t_i, t_{i+1}]$. Thus, if the objective function has a low value, then the CQI samples within each PSW are homogeneous; it stems that, within each PSW, the optimized load thresholds shall behave uniformly well, and network performance drop will not be noticeable by users at any time.

In principle, problem in (2) can be formulated via Mixed Integer Linear Programming (MILP). However, in practical instances, a simpler method can be used, as will now be described in more below.

Further Optimised implementation of Step 2

First, discretize the 24 hour period or other period into, say, a grid with N equispaced points (if N=24, then the interval between two consecutive points is 1 hour). Then, explore the search space of all possible $t_1, \ldots, t_n$ combinations and compute the corresponding objective function (2), as follows:

$$\text{for } t_1 = 0, \ldots, 24:$$

$$\text{for } t_2 = t_1 + H, \ldots, (t_1 - H) mod 24:$$

$$\text{for } t_3 = t_2 + H, \ldots, (t_2 - H) mod 24:$$

$$\ldots.$$

Compute

$$f(t_1, \ldots, t_n) = \frac{1}{n}\big(\text{Var}(CQI[t_n, t_1]) + \text{Var}(CQI[t_1, t_2]) + \cdots + \text{Var}(CQI[t_{n-1}, t_n])\big)$$

It will be appreciated that, for reasonable values of $N$ = 24 and $H$ = 6, the number of all such possible values of $t_1, \ldots, t_n$ is a few thousands, so relatively low, for each PSG. Moreover, this operation is typically to be run in non-real time and once for all, before the threshold optimization procedure is triggered for a specific PSG.

Then, one computes the value $t_1^*, \ldots, t_n^*$ that minimizes $f$:

$$t_1^*, \ldots, t_n^* = \arg \min_{t_1, \ldots, t_n} f(x_1, \ldots, x_n)$$

Finally, the optimized PSWs are produced as follows:

$$\text{PSW1}=[t_1^*, t_2^*], \text{PSW2}=[t_2^*, t_3^*], \ldots, \text{PSWn}=[t_n^*, t_1^*]$$

Example embodiments allow the activation of energy savings features throughout the day, hence allowing for higher energy savings, while ensuring the KPI constraint Pr($KPI \geq Y$) $\geq X$ is fulfilled at any hour or other period of the day (and not only on average over the whole 24 hours, as a naive implementation would do) so as to guarantee a seamlessly good KPI level to users throughout the day. Finally, it will be appreciated that that the energy savings feature is not necessarily active during each PSW; in fact, if optimized thresholds are null (MinLoadThreshold=0) then no cell is ever put to sleep during a certain PSW.

As a cell is switched-off, the power amplifiers of the cell are consequently disabled, which has a benefit of saving energy. Yet, this action may also have consequences to the network, such as inducing an increase of PRB utilization on remaining cells. During the procedure of switching-off a cell, terminal devices connected to the cell are handed over to neighbouring cells within the same PSG. This may reduce the throughput of all terminal devices, because as PRB utilization per cell increases, the average throughput perceived by the terminal devices may decrease.

Threshold Optimisation

Once the different PSWs have been determined, as mentioned in step 4 of FIG. 6 above, the thresholds within each of those PSWs are optimized, as will now be described in more detail. When determining the pre-configured threshold values, those should be determined such that the highest energy savings are obtained while avoiding QoS degradation to the terminal devices and frequent cell shutdowns. Additionally, there may be further objectives such as avoiding too frequent cell shutdown/power-up that may jeopardize the network stability and induce too frequent handovers. Thus, for each PSW within each PSG it may be desirable to determine a pair of thresholds, that is $\rho_{min}, \rho_{max}$ (MinLoad, MaxLoad) that achieve:

$$\max_{\rho \in \mathcal{R}} \text{ energy saved}(\rho) \quad (ES)$$

$$s.\,t. \ \ \Pr(\text{avg UE throughput}(\rho) > Y \text{ Mbps}) > X$$

where $\mathcal{R}$ is the set of all admissible thresholds:

$$\mathcal{R} = \{\rho = [\rho_{min}, \rho_{max}] \colon\ 0 < \rho_{min} < \rho_{max} < 100\}$$

and the value of $X, Y$ may be configured to be for example $Y = 4, X = 0.95$. Therefore, the optimization of pre-configured thresholds ($\rho_{min}, \rho_{max}$) for each PSW within each PSG such that it maximizes the saved energy while guaranteeing a minimum experienced throughput for terminal devices is desirable.

In order to optimize the values that can then be used to determine the pre-configured thresholds, which may also be referred to as pre-determined thresholds, a combination of offline and online optimization may be utilized. Offline optimization may be understood as optimization that may require measurements from a live network, but it does not cause any configuration changes to the live network and thus the offline optimization may be performed without disturbing the network and/or impacting key performance indicators of the network. Online optimization may be understood as optimization that may be done by configuring the live network and measuring the outcome, which may disturb the network and/or impact key performance indicators of the network. The network may be a cellular communication network comprising a plurality of access nodes. As part of the offline optimization, a search of ρ may be delimited to a limited and safe search region, which may be referred to as a segment. Once the segment is determined, then as part of online optimization a selection of threshold values, that are pre-determined threshold values, may be fine-tuned within the determined segment. After the threshold values have been determined, then a constraint regarding the minimum throughput that is to be experienced by a terminal device that is served by the network may be fine-tuned in the online optimization. It is to be noted that the constrain can already be taken into account in order to determine the threshold segment in the offline optimization. This may be done for example by having the threshold values integrated as an energy saving xApp.

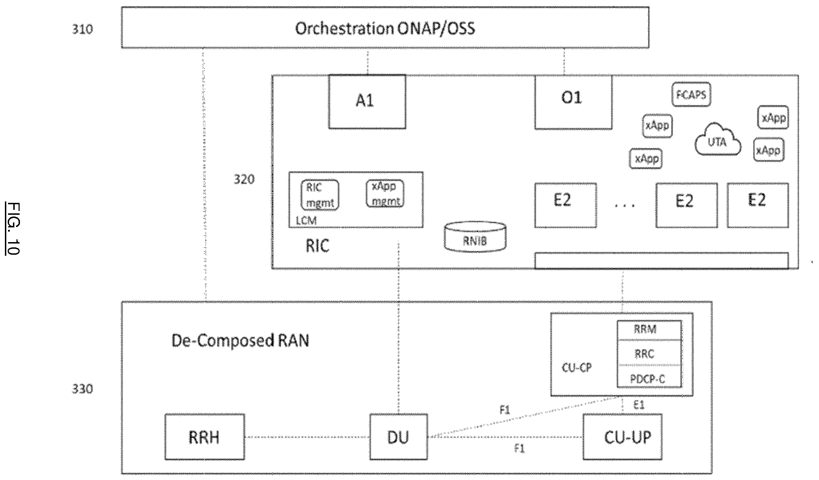

FIG. 10 illustrates an exemplary embodiment of a network architecture in which the optimization takes place. In this exemplary embodiment, there is Orchestration 310 which may comprise Open Network Automation Platform (ONAP) and/or Operations Support System (OSS). The orchestration 310 is then connected to a RIC 320 and typically to a De-composed RAN 330, although other RAN implementations are possible such as those used in Long Term Evolution (LTE) and earlier 3GPP implementations. The RIC 310 may then run the optimization of the threshold values as an xAPP. The RIC 310 may have interfaces A1 and O1 to connect to the orchestration 310 and interfaces E2 to connect to the Central Unit Control Plane (CU-CP) of the de-composed RAN 330. The de-composed RAN may further comprise remote radio head (RRM), a distributed unit (DU) and central unit user plane (CU-CP).

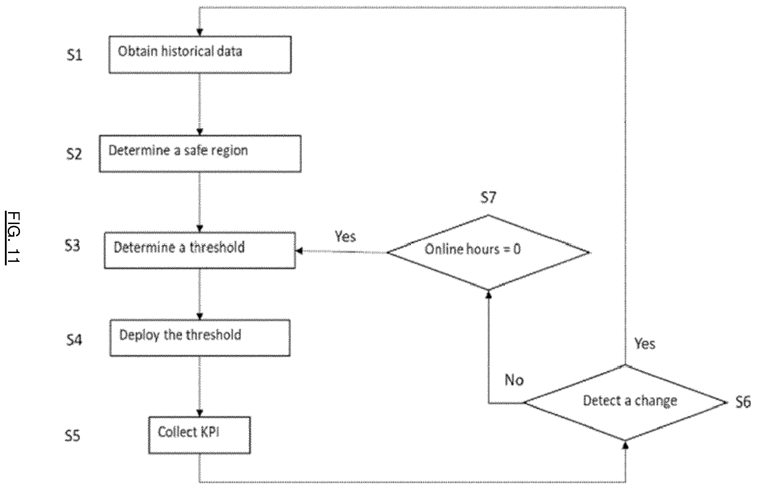

FIG. 11 illustrates a flow chart according to an exemplary embodiment for optimizing the threshold values. In this exemplary embodiment, the optimization begins in step S1, in which an Over-the-Top (OTT) node, such as a RIC, performs collecting historical data from several different PSGs as already mentioned above. The historical data may comprise cell-level information that is collected for a certain period of time, such as for two weeks. As such, the historical data may be collected from a plurality of access nodes comprised in a network. The collected data may comprise data metric, for example average throughput for a terminal device, PRB utilization, carrier frequency, average Channel Quality Indicator (CQI) and/or time stamps of time window, such as time window of 15 minutes, over which the data metrics are averaged.

Next, in step S2, the OTT node determines, for example by computing, a threshold region $\mathcal{R}_g$ for each PSW within each PSG $g$, that may then be fine-tuned later on for example using an online exploration. The region $\mathcal{R}_g$ may be defined as a set of threshold pairs $\rho_{min}, \rho_{max}$. The determined threshold region $\mathcal{R}_g$ may be considered as a safe region and it may be determined for example by searching a 1-D line.

The safe search region $\mathcal{R}_g$ may have the following properties: it is 1 dimensional, for example, it can be parameterized by a single real value $r \in [0; 1]$ and/or minimum and maximum thresholds $\rho_{min}$ and $\rho_{max}$ are non-increasing variables on $r$.

It is to be noted that steps S1 and S2 may be performed offline. This offline phase may be performed at certain time intervals, for example after certain number of weeks and the time interval may be denoted as $T_{\text{offline}}$ [weeks] and typically occur in response to any recalculation of the PSWs. This allows to obtain new data for determining a new safe

search region $\mathcal{R}_g$ . The re-do of these offline steps may be determined by a user, in other words, manually, or after a triggering event has been detected. A triggering event may be for example such that online exploration is stuck at either of the two extremes such as low or high thresholds, meaning that most likely the optimal point is beyond the search region which then needs to be recomputed and/or CQI histogram changes drastically, due to for example construction of a new building.

It is to be noted that step S2 may restrict the threshold search region from the region of all admissible thresholds. For example, from

$$\mathcal{R} = \{\rho = [\rho_{min}, \rho_{max}]: 0 < \rho_{min} < \rho_{max} < 100\}$$

to a safe region $\mathcal{R}_g$ which is a subset of $\mathcal{R}$ . It is to be noted that the region may be determined individually for at least one access node, or individually for each of the access nodes, that are comprised in the plurality of access nodes comprised in the network. The safe search region $\mathcal{R}_g$ has, in this exemplary embodiment, the following properties: $\mathcal{R}_g$ is a 1-dimensional line and it can may be parameterized by a single real value $r \in [0; 1]$; and minimum and maximum thresholds $\rho_{min}$ and $\rho_{max}$ both increase, that is, do not decrease as r increases from 0 to 1. In other words, the safe region may be considered as a subset of all admissible thresholds and the subset comprises elements that are sortable such that the minimum and maximum thresholds are both non-decreasing.

It is also to be noted that in step S2 the OTT node may retrieve, for a specific PSW within a PSG $g$, historical data regarding the following aspects: CQI distribution, PRB utilization distribution and/or available carrier frequencies. The historical data regarding these aspects may then be used in a network simulator as an input and for different pairs of thresholds $\rho \in \mathcal{R}$ , where $\mathcal{R}$ is the set of all admissible thresholds. In this example, two different outputs are then produced, for a specific PSW within a PSG $g$ and each pair of thresholds $\rho \in \mathcal{R}$ such that $\overline{e}_g(\rho)$ is the estimation of the average number of inactive cells, proportional to the saved energy in comparison to when all cells are active all the time and $\overline{f}g(\rho)$ = estimation of the probability that avg UE throughput, that is average user throughput which may be understood as average throughput experienced by a terminal device, is higher than the predefined threshold Y [Mbps], such as $Y$ = 4 Mbps, for each pair of thresholds $\rho \in \mathcal{R}$ .

It is further to be noted that in step S2, once $\overline{e}_g(\rho)$ and $\overline{f}_g(\rho)$ are estimated for all admissible thresholds $\rho \in \mathcal{R}$ and for PSG $g$, the restricted safe region $\mathcal{R}_g$ may be computed for example as follows: The straight line are considered to pass through the origin $\rho = (\rho_{min}, \rho_{max}) = (0,0)$ with $\rho_{max} > \rho_{min}$ i.e., $\rho_{max} = \alpha \, \rho_{min}$ where $\alpha$ = atan($\phi$) with $\dfrac{\pi}{4} < \phi < \dfrac{\pi}{2}$ . For each line with inclination $\phi$, a safe auxiliary region $\mathcal{R}_g (\phi)$ is defined as the set of thresholds with probability that throughput is higher than threshold Y and close enough to the target $X$. This may be formulated as

$$\mathcal{R}_g(\phi) = \{\rho: \rho_{max} = \text{atan}(\phi) \, \rho_{min} \text{ and } \left|f_g(\rho) - X\right| < \epsilon\}$$

where $\varepsilon$ can be pre-defined as input (e.g., $\varepsilon$ = 0.02) and it may be used to define the risk-sensitivity in terms of throughput (i.e., QoS): lower $\varepsilon$ allows to restrict the search region, with potentially lower energy savings but with better QoS performance. Therefore, the line inclination $\phi_g$ guaranteeing the highest potential saved energy may be chosen using the following formula:

$$\phi_g = \arg\max_{\phi} \sum_{\rho \in \mathcal{R}_g(\phi)} e_g(\rho)$$

and the safe search region for PSG $g$ may be defined as the auxiliary region in correspondence of the selected angle $\phi_g$: $\mathcal{R}_g = \mathcal{R}_g (\phi_g)$.

This way the safe region $\mathcal{R}_g$ comprises only safe thresholds, which helps to guarantees that the throughput of a terminal device is sufficiently close to the target, namely:

$$\text{Pr}(\text{avg UE throughput}(\rho) > Y \text{ Mbps}) \approx X, \qquad \forall \rho \in \mathcal{R}_g$$

This also helps to guarantee that the throughput actually experienced during online exploration is not too low with respect to the target $X$.

A further advantage is that as mentioned above, across safe region $\mathcal{R}_g$ thresholds jointly increase and thus along that direction the amount of saved energy increases, and the throughput degrades, that is Pr(avg UE throughput($\rho$) > $Y$ Mbps) decreases. Thus, in order to maximize saved energy, it is sufficient to search for the threshold $\rho \in \mathcal{R}_g$ that achieves exactly Pr(avg UE throughput($\rho$) > $Y$ Mbps) = $X$; not higher, since more energy can be saved and not lower, since QoS constraint would be violated. Thus, step S2 allows simplification the problem at hand and enables considering only the throughput as the only target to aim at and the energy saving maximization naturally follows as a side product.

Next, in the exemplary embodiment of FIG. 11, in step S3, the thresholds may be fine-tuned as part of online process. This optimization may be implemented within RIC or in some exemplary embodiments, within EdenNet, and it chooses the next threshold $\rho_i$ to be deployed, aiming to track the time-varying optimal thresholds $\rho^*$ that achieve: Pr(avg UE throughput($\rho^*$) > $Y$ Mbps) = $X$ with e.g. $Y = 4$, $X = 0.95$.

As one of the advantages achieved by step S2 is simplifying the problem, the online threshold search may focus on the avg throughput of a terminal device, and ensure that at all times the probability of the throughput is higher than the threshold Y (e.g., $Y = 4$ Mbps) and is equal to the target probability $X$ (e.g., $X = 95\%$), i.e., Pr(avg UE throughput($\rho$) > $Y$ Mbps) = $X$.

During the optimization, the following aspects are to be considered: The function $f(\rho)$ = Pr(avg UE throughput($\rho$) > $Y$ Mbps) may be unknown and thus it is to be observed whether, after deploying thresholds $\rho$, the resulting throughput was actually > $Y$ Mbps, and estimate $f(\rho)$ accordingly. Also, if the target probability X is high (e.g., >98%) a considerable number of samples, such as at least >$10^3$ samples, could be needed to accurately estimate $f(\rho)$ using statistical methods such as Wilson / Jeffreys / Clopper-Pearson confidence intervals. If for example 10 samples would then be collected per one hour, assuming that counter collection is every T=15 minutes and approximately 3 cells per PSG, the thresholds would not be modifiable for at least weeks, which would affect the convergence time of the algorithm and its ability to follow up on environmental changes. Therefore, it is beneficial to estimate the value $f(\rho)$ with considerable fewer samples and based on a Bayesian approach. In step S3, the unknown function $f$ may be parametrized. This may be performed only at first iteration $i = 0$. $f_\theta(r)$ may be chosen as a parametrized version of the true $f(\rho)$ function, in which

- $r \in [0;1]$ parametrizes the safe region $\mathcal{R}_g$ : $r = 0$ corresponds to lower-left point, $r = 1$ is the top-right point, and $r \in (0; 1)$ anything in between
- $\theta$ characterizes the shape of $f_\theta$. For example, if $f_\theta$ is a linear function, then: $f_\theta(r) = a - br$, where $\theta = [a, b]$. Note that $\& > 0$ since $f_\theta$ is a decreasing function such that throughput degrades as thresholds increase.

Also in step S3, there may be prior belief on parameters $\theta$ at first iteration $i = 0$. Offline computation may already provide an estimation of the unknown function $f$, that may be referred to as $\bar{f}$. $\bar{\theta}$ may be the value of parameters $\theta$ that best approximate $\bar{f}$:

$$\bar{\theta} = \arg\min_\theta ||\bar{f} - f_\theta||$$

The prior belief Pr ($\theta_0$) may then be defined on the parameters $\theta$ as a normal multi-variate distribution having $\bar{\theta}$ as mean vector and $\sigma I$, in which $I$ is the identity matrix as covariance matrix, meaning that parameters are initially independent and each with variance $\sigma$. It is to be noted that $\sigma$ may be user-defined and for example $\sigma = 0.05$.

Step S3 may also comprise updating belief on parameters $\theta$. At iteration $i = 1,2, ...$ throughput counters may be collected every T [minutes] for a specific threshold $\rho_i$ that may be parameterized as $r_i$. Call $y_i = \left[ y_i^{(1)}, ..., y_i^{(M_i)} \right]$

, where $y_i^{(m)}$ denotes whether the m-th thpt sample associated to $r_i$ is $\geq$ Y Mbps. $Y_i = [y_1, ... , y_i]$ may be for all observations up to iteration $i$. Then the belief on parameters $\theta$ may be updated via Bayes theorem:

$$\Pr(\theta_i|Y_i) = \Pr(\theta_i|\boldsymbol{y}_i, Y_i) = \frac{\Pr(\boldsymbol{y}_i \mid \theta_i, Y_{i-1}) \times \Pr(\theta_i \mid Y_{i-1})}{\Pr(\boldsymbol{y}_i \mid Y_{i-1})}$$

$$= \frac{\Pr(\boldsymbol{y}_i \mid \theta_i) \times \int_{\theta_{i-1}} \Pr(\theta_{i-1}|Y_{i-1}) \Pr(\theta_i|\theta_{i-1}) \, d\theta_{i-1}}{\Pr(\boldsymbol{y}_i \mid Y_{i-1})}$$

such that $\Pr(\theta_i|\theta_{i-1})$ is the transition law according to which the unknown thput function f(.) evolves over time, due to varying network conditions. $\Pr(\theta_i|\theta_{i-1})$ may be set to a normal variable with zero mean, diagonal covariance matrix and fixed variance (e.g., 0.01). This choice may allow to quickly react to variations. The likelihood of observations is then

$$\Pr(\boldsymbol{y}_i \mid \theta_i) \prod_i f_\theta(r_i)^{\Sigma_m y_i^{(m)}} \left(1 - f_\theta(r_i)\right)^{M_i - \Sigma_m y_i^{(m)}}.$$

Step S3 may further comprise choice for the next threshold. At iteration $i = 1, 2, ...$, the threshold $r_i$ that achieves, on average, the target probability with respect to the current belief may be chosen using the formula:

$$\mathbb{E}[f_\theta(r_i)] = X$$

where expectation $\mathbb{E}$ is wrt the posterior $\Pr(\theta_i|Y_i)$ determined as described above.

The online threshold exploration procedure described above may have the following advantages: adapting to changing environments. As relatively few throughput samples, for example 40, corresponding to 4/5 hours of KPI collection, every T=15 minutes, are required to estimate $f(r_i)$ well, thresholds can be updated at higher frequency than frequentist methods, such as every 4/5 hours instead of weeks, which allows to track more closely the variation of the optimal threshold. Thus, the optimal thresholds may be determined in accordance with changes that occur in the environment. The changes may comprise for example changes in the location of terminal devices being served, changes in CQI distribution and the evolution of traffic density from day to day. Also, long term and shot term throughput for a terminal device may be guaranteed. As the adaptation to the changes is fast, throughput may be guaranteed also in short term, such as one day, thereby avoiding sudden drops in performance.

Next, in the exemplary embodiment of FIG. 11, in step S4, the determined thresholds $\rho_i$, that are now the predetermined thresholds, are communicated by the OTT node that controls the access nodes (such as, for example, base stations) of PSG g. In other words, the determined thresholds are provided to the network for deployment by providing them to a central entity of the network, such as an ES xApp in the RIC, that then controls the access nodes comprised in the network. After this in step S5, while the thresholds are deployed, key performance indicators, KPIs, such as average throughput, are collected by the OTT node at fixed period T, such as T=15 mins. Average throughput may be a throughput determined for a terminal device that can be referred to as a generic terminal device by for example dividing the cell throughput by the number of connected terminal devices. So instead of determining the average throughput for a particular terminal device, it is estimated as a generic KPI.

As the thresholds can be updated, in S6 it is determine if a change has been detected (such as a change in the PSWs) and if yes, then the optimization proceeds to step S1 again. A change may also be understood as a predetermined time having passed by and therefore causing the need to re-do to perform the optimization. If the change was not detected and not enough time has passed for re-doing the offline steps of S1 and S2, then the optimization process returns to step S3.

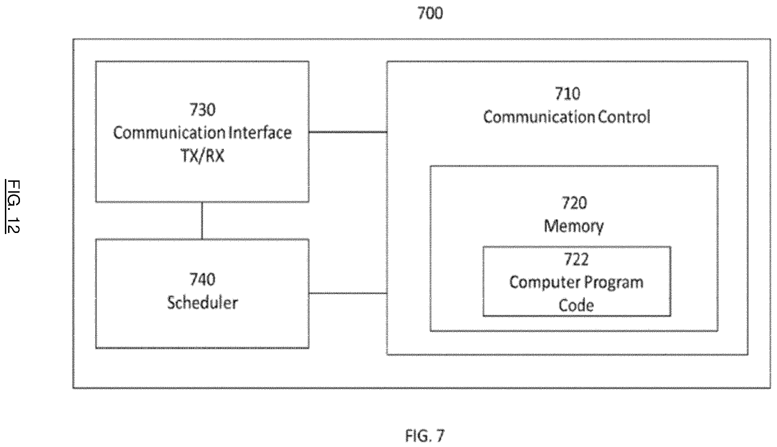

The apparatus 700 of FIG.12 illustrates an example embodiment of an apparatus that may be an access node or base station or be comprised in an access node or base station. The apparatus may be, for example, a circuitry or a chipset applicable to an access node to realize the described embodiments. The apparatus 700 may be an electronic device comprising one or more electronic circuitries. The apparatus 700 may comprise a communication control circuitry 710 such as at least one processor, and at least one memory 720 including a computer program code (software) 722 wherein the at least one memory and the computer program code (software) 722 are configured, with the at least one processor, to cause the apparatus 700 to carry out any one of the example embodiments of the access node described above.

The memory 720 may be implemented using any suitable data storage technology, such as semiconductor-based memory devices, flash memory, magnetic memory devices and systems, optical memory devices and systems, fixed memory and removable memory. The memory may comprise a configuration database for storing configuration data. For example, the configuration database may store current neighbour cell list, and, in some example embodiments, structures of the frames used in the detected neighbour cells.

The apparatus 700 may further comprise a communication interface 730 comprising hardware and/or software for realizing communication connectivity according to one or more communication protocols. The communication interface 730 may provide the apparatus with radio communication capabilities to communicate in the cellular communication system. The communication interface may, for example, provide a radio interface to terminal devices. The apparatus 700 may further comprise another interface towards a core network such as the network coordinator apparatus and/or to the access nodes of the cellular communication system. The apparatus 700 may further comprise a scheduler 740 that is configured to allocate resources.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods. The tern non-transitory as used herein, is a limitation of the medium itself (i.e., tangible, not a signal) as opposed to a limitation on data storage persistency (e.g. RAM vs ROM).

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although example embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1. An apparatus (700), comprising:

   at least one processor (710); and
   at least one memory (720) storing instructions that when executed by the at least one processor cause the apparatus at least to perform:

collecting (Step 1) traffic information indicative of user radio conditions within a cell group (PGS-1 - PSG-3) comprising at least one cell; and

determining (Step 2), from said traffic information, a plurality of time windows (PSW1 - PSW4), the plurality of time windows having different specified user traffic load threshold conditions for switching off and switching on of cells within said cell group.

2. The apparatus of claim 1, wherein said plurality of time windows fill a first time period (T), are contiguous within said first time period and/or comprise a sequence of adjacent, non-overlapping time windows within said first time period.

3. The apparatus of claim 1 or 2, wherein time windows within said plurality of time windows have a minimum duration.

4. The apparatus of any preceding claim, wherein at least one time window comprises a time period where it is determined from said traffic information falling within that time period that said traffic information within that time period is stable.

5. The apparatus of any one of claims 2 to 4, wherein said plurality of time windows comprise time periods determined to have a variance within each time period which is lower than across said first time period.

6. The apparatus of any preceding claim, wherein said plurality of time windows comprise time periods determined to have a sum across said time periods of a variance of said traffic information within each time period which is minimised.

7. The apparatus of any preceding claim, wherein the at least one processor cause the apparatus at least to perform: calculating (S3) different specified user traffic load threshold conditions for different time windows from said traffic information falling within those windows.

8. The apparatus of any preceding claim, wherein said specified user traffic load threshold conditions define a pair of thresholds (MaxLoad, MinLoad) for determining if a cell is to be switched on or switched off.

9. The apparatus of claim 8, wherein said pair of thresholds comprise a lower threshold (MinLoad) below which a cell is to be switched off and an upper threshold (MaxLoad) above which a cell is to be switched on.

10. The apparatus of any preceding claim, wherein the at least one processor cause the apparatus at least to perform: periodically repeating determining said plurality of time windows and calculating different specified user traffic load threshold conditions for different time windows.

11. The apparatus of any preceding claim, wherein the at least one processor cause the apparatus at least to perform: determining for a current time window whether to switch off or switch on cells within said cell group based on a relationship between said specified user traffic load threshold conditions for that current time window and current user traffic load within said cell group.

12. The apparatus of any preceding claim, wherein said traffic information indicative of user radio conditions comprises one or more Key Performance Indicators, counters and/or a Channel Quality Indicator.

13. The apparatus of any preceding claim, wherein said first time period repeats.

14. A method comprising:

collecting (Step 1) traffic information indicative of user radio conditions within a cell group comprising at least one cell (PSG-1 - PSG-3); and

determining (Step 2), from said traffic information, a plurality of time windows (PSW1 - PSW4), the plurality of time windows having different specified user traffic load threshold conditions for switching off and switching on of cells within said cell group.

15. A non-transitory computer readable medium comprising program instructions stored thereon for performing at least the following:

collecting (Step 1) traffic information indicative of user radio conditions within a cell group (PSG-1 - PSG-3) comprising at least one cell; and

determining (Step 2), from said traffic information, a plurality of time windows (PSW1 - PSW4), the plurality of time windows having different specified user traffic load threshold conditions for switching off and switching on of cells within said cell group.

FIG. 1

FIG. 2

FIG. 3

FIG. 4

FIG. 5

FIG. 6

FIG. 7

FIG. 8

FIG. 9

FIG. 10

FIG. 11

700

FIG. 7

Europäisches Patentamt
European Patent Office
Office européen des brevets

# EUROPEAN SEARCH REPORT

Application Number

EP 24 15 0917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/100157 A1 (HUAWEI TECH CO LTD [CN]) 19 May 2022 (2022-05-19) * the whole document * | 1-15 | INV. H04W52/02 H04B7/00 H04W72/00 H04W76/00 H04W88/00 |
| X,P | US 2023/284133 A1 (LUO RONGHUI [CN] ET AL) 7 September 2023 (2023-09-07) * paragraphs [0005] - [0076] * * figures 4, 5 * * paragraphs [0096] - [0236] * | 1-15 | |
| X | CN 112 929 892 A (CHINA UNICOM) 8 June 2021 (2021-06-08) * paragraphs [0004] - [0010] * * paragraphs [0024] - [0093] * | 1-15 | |
| X | CN 112 312 531 B (CHINA UNICOM) 27 September 2022 (2022-09-27) * paragraphs [0004] - [0010] * * paragraphs [0024] - [0089] * | 1-15 | |

TECHNICAL FIELDS SEARCHED (IPC)

H04W
H04B

The present search report has been drawn up for all claims

| Place of search | Date of completion of the search | Examiner |
|---|---|---|
| The Hague | 16 June 2024 | Schmid, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 0917

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2024

| Patent document cited in search report | | Publication date | Patent family member(s) | | Publication date |
|---|---|---|---|---|---|
| WO 2022100157 | A1 | 19-05-2022 | CN | 114501488 A | 13-05-2022 |
| | | | EP | 4231696 A1 | 23-08-2023 |
| | | | JP | 2023549211 A | 22-11-2023 |
| | | | US | 2023284133 A1 | 07-09-2023 |
| | | | WO | 2022100157 A1 | 19-05-2022 |
| US 2023284133 | A1 | 07-09-2023 | CN | 114501488 A | 13-05-2022 |
| | | | EP | 4231696 A1 | 23-08-2023 |
| | | | JP | 2023549211 A | 22-11-2023 |
| | | | US | 2023284133 A1 | 07-09-2023 |
| | | | WO | 2022100157 A1 | 19-05-2022 |
| CN 112929892 | A | 08-06-2021 | NONE | | |
| CN 112312531 | B | 27-09-2022 | NONE | | |

EPO FORM P0459

For more details about this annex : see Official Journal of the European Patent Office, No. 12/82